Europäisches Patentamt

European Patent Office

Office européen des brevets

(11) Publication number: **0 090 375**
**A2**

## (12) EUROPEAN PATENT APPLICATION

(21) Application number: **83102993.9**

(22) Date of filing: **25.03.83**

(51) Int. Cl.³: **G 11 B 5/52, G 11 B 15/60**

(30) Priority: **31.03.82 JP 44701/82 U**

(43) Date of publication of application: **05.10.83**
**Bulletin 83/40**

(84) Designated Contracting States: **AT DE FR GB IT**

(71) Applicant: **Hitachi, Ltd., 5-1, Marunouchi 1-chome, Chiyoda-ku Tokyo 100 (JP)**

(72) Inventor: **Okada, Shinji, 3600-83, Nakane, Katsuta-shi (JP)**
Inventor: **Kochi, Masanori, 14-1-8, Ishikawacho, Katsuta-shi (JP)**
Inventor: **Yoshida, Naoto, 426-3, Tabiko, Katsuta-shi (JP)**
Inventor: **Moriyama, Yasuji, 2-30, Taiseicho, Katsuta-shi (JP)**

(74) Representative: **Altenburg, Udo, Dipl.-Phys. et al, Patent- und Rechtsanwälte Bardehle-Pagenberg-Dost-Altenburg & Partner Postfach 86 06 20, D-8000 München 86 (DE)**

(54) **Rotary magnetic head drum device.**

(57) A rotary magnetic head drum device of a helical scan type including rotary magnetic heads (34a and 34b), and a head drum constituted by a rotary drum (3) and a stationary drum (2) located above and below the heads in juxtaposed relation and inclined at a predetermined angle of inclination θ together with the heads. A tapering surface (371) or a stepped surface (372) is formed at the rotary drum located over the heads and extends from an end of a top surface of the rotary drum to an upper end (a) of an outer circumferential surface (D) thereof to reduce the thickness of an outer peripheral portion (37) of the rotary drum, to thereby reduce the vertical dimension (L) of the head drum when it is located in an inclined position.

## ROTARY MAGNETIC HEAD DRUM DEVICE

### FIELD OF THE INVENTION

This invention relates to magnetic recording and reproducing apparatus of the helical scan type, and more particularly it is concerned with a rotary magnetic head drum device for use with video tape recorders and the like of the helical scan type.

### BRIEF DESCRIPTION OF THE DRAWINGS

Fig. 1 is a sectional view of the essential portions of a rotary magnetic head drum device of the type directly connected to a motor according to the prior art;

Fig. 2 is a perspective view of the rotary magnetic head drum device according to an embodiment of the invention;

Fig. 3 is a sectional view of the essential portions of the head drum device shown in Fig. 2;

Fig. 4 is a sectional view of one form of rotary drum according to the invention;

Fig. 5 is a sectional view of another form of rotary drum according to the invention;

Fig. 6 is a plan view of still another form of rotary drum according to the invention; and

Fig. 7 is a sectional view showing a portion of the rotary drum shown in Fig. 6.

DESCRIPTION OF THE PRIOR ART

Nowadays two types of video tape recorders are available: one is a table-top type and the other is a portable type. One of the problems encountered in designing portable video tape recorders is how to obtain an overall compact size and a light weight in a portable video tape recorder. The head drum device plays an important role in reducing the size and weight of a video tape recorder to provide a recorder of a slim type, so that it is urgently required that the size of the head drum device be reduced and particularly the thickness thereof be decreased.

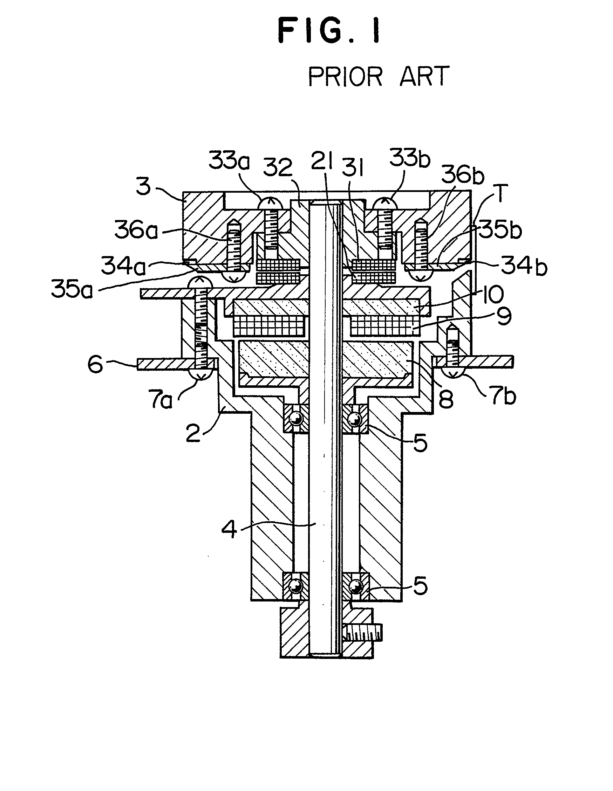

Fig. 1 is a sectional view of the essential portions of a rotary magnetic head device, showing one example of the head drum device of the prior art. The rotary magnetic head device of the prior art shown in Fig. 1 will be outlined by referring to the figure. The head drum device comprises a stationary drum (lower drum) 2 secured to a chassis 6 by screws 7a and 7b, and a rotary drum (upper drum) 3 secured to an output shaft 4 of a motor 1 through a rotary disc 32. Interposed between the two drums 2 and 3 are bearings 5 and 5, a magnet 8, a motor coil 9, a stator yoke 10, a stator transformer 21 and a rotor transformer 31 stacked in superposed relation in the indicated order.

In the aforesaid construction, all the components should have their thicknesses reduced and the thickness of the stationary drum 2 should be reduced by decreasing the spacing between the two bearings 5 and 5, if it is desired to obtain a head drum device of the slim type by reducing its size and weight.

It would be impossible to reduce the thickness of the rotary disc as much as would be desired, because the precision with which it is finished would be reduced if its thickness were inordinately reduced. Also, a reduction in the thicknesses of the rotor transformer, stator transformer, motor coil and magnet would cause a deterioration of their characteristics. If the thickness of the stationary drum were reduced and the distance between the two bearings in the stationary drum were shortened, the output shaft of the motor would become wobbly and cause a variation to occur, which causes the positions of heads 34a and 34b secured to the rotary drum with respect to the vertical (i.e., the heights of the heads) to vary depending on the phase of rotation. As a result, the positions in which a tape T is scanned by the heads would vary depending on the phase of rotation, or scanning of the tape by the heads would lack linearity, thereby adversely affecting the compatibility of the tapes.

To obviate the aforesaid disadvantages of the prior art, a proposal has been made to use a head drum device of the construction in which rotary sections are provided above and below the stationary drum, and a rotor transformer (signal transmitter) and heads are secured in place in the upper rotary section (rotary drum) and a motor stator including a motor coil is secured in place in the lower rotary section, with a stator transformer (signal transmitter) juxtapozed against the rotor transformer and beaings for journaling the upper and lower rotary sections being interposed between the upper and lower rotary sections. If the head drum device were constructed as aforesaid, it would be possible to obtain a compact size and a small thickness in a head drum device without causing deterioration of performance. To be specific, it would be possible to reduce the size and thickness to about 1/2 those of the corresponding device of the prior art.

However, an increasingly greater demand has been made for video tape recorders of more compact size and ligher weight, and the aforesaid proposal for providing improvements in head drum devices has become impossible to meet the requirements in size and weight. Nowadays, like other electrical appliances for household use, video tape recorders of small size for household use are becoming more compact in size and smaller in thickness, and there is a keen competition among rival manufacturers for reducing the size of the articles on the order of 1 mm in height. Thus one of the most important problems to be obviated in designing small video tape recorders is how to reduce its size still further, and compactness is one of the features on which the manufacturers rely for promoting sales. In recent years announcements have been made that video tape recorders of 80 mm in height will be placed on the market, although the general standard for the height of this type of articles is 130 mm.

SUMMARY OF THE INVENTION

Accordingly this invention has as its object the provision of a head drum device of a construction suitable for obtaining a compact size and a light weight in a head drum device, which is suitable for use with a magnetic recording and reproducing apparatus which tends to become more compact in size, smaller in thickness and lighter in weight.

This invention has been developed based on the fact that in rotary magnetic head drum devices of a helical scan type, the head drum is located obliquely with respect to the tape and that they are inclined by an angle in the range between an angle substantially equal to the helical lead angle for the tape and an angle twice the helical lead angle.

The outstanding characteristic of the invention is that one of the rotary drum and stationary drum that is located in an upper portion of the head drum device or the rotary drum, for example, is formed at an end portion (outer peripheral portion) of a surface opposite the head supporting surface thereof with a tapering surface or stepped surface commensurate with the inclination angle of the head drum or a combination of the tapering and stepped surfaces.

By virtue of the aforesaid feature, it is possible to provide a rotary magnetic head device of practical value capable of having its size and weight reduced to meet the requirements of a reduction in size and weight in magnetic recording and reproducing apparatus now in great demand.

DESCRIPTION OF THE PREFERRED EMBODIMENT

The invention will now be described by referring to the embodiment shown in the drawings.

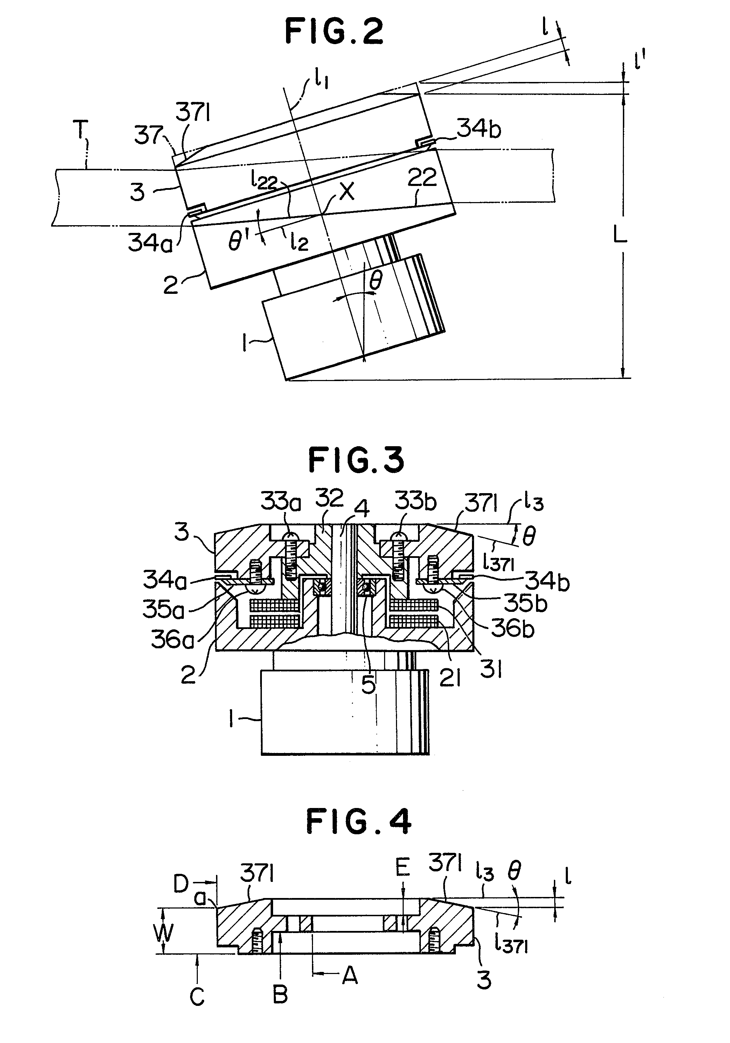

Fig. 2 is a perspective view of a rotary magnetic head drum device of a helical scan type as mounted on a magnetic recording and reproducing apparatus (video tape recorder, for example), and Fig. 3 is a sectional view of the essential portions of the device. As shown, a head drum includes a motor 1, a stationary drum 2 formed with a tape guide section 22 and a rotary drum 3. The stationary drum 2 has mounted therein a stator transformer 21 and a rotor transformer 31 located in juxtaposed relation as shown in Fig. 3. The rotary drum 3 is secured by screws 33a and 33b to a rotary disc 32 supported by a rotary shaft 4. Magnetic heads 34a and 34b are mounted on head plates 35a and 35b secured to a bottom surface of the rotary drum 3 by screws 36a and 36b respectively. The rotary drum 3 is journaled by a bearing 5. Although not shown, the motor 1 mounts therein parts of the motor (rotating parts) including a rotor plate, a motor coil, a magnet, etc., in the same manner as previously described by referring to the head drum device, and bearings for journaling these rotating parts are also mounted in the motor 1.

In the aforesaid construction, it is possible to reduce the axial dimension of the head drum device by reducing as much as possible the thicknesses of the motor 1, stationary drum 2 and rotary drum 3, to thereby reduce the size and weight of the head drum device itself and obtain an overall compact size in a magnetic recording and reproducing apparatus. However, there are limits to the reduction in size and weight obtained in this way, and when all the components have their thicknesses reduced, there would be raised the problems discussed in the description of the prior art, so that difficulties would be faced with when attempts are made to reduce the thickness as described hereinabove.

The head drum device constructed in accordance with an embodiment of the invention is shown in Figs. 2 and 3. In this head drum device, the head drum including the stationary drum 2 and rotary drum 3 are located obliquely with respect to a magnetic tape T brought into contact with the drums 2 and 3 for a circumferential extent corresponding to a predetermined angle. More specifically, the head drum is inclined by an angle $\theta$ (VHS: 12°50') which is in the range between an angle which is substantially equal to a lead angle $\theta'$ (VHS: 5°57') of the tape edge guide section 22 on the stationary drum 2 and an angle substantially twice the lead angle or the angle $\theta'$ formed by a line $\ell_{22}$ extending along the tape edge guide section 22 and a line $\ell_2$ extending perpendicularly (left-wardly in Fig. 2) from a meeting point X of the line $\ell_{22}$ and a line $\ell_1$ extending in a direction in which the head drum is divided into left and right half portions. The rotary drum 3 which is located above the stationary drum 2 has a tapering surface 371 formed on an outer peripheral portion 37 of its top surface. As shown in Fig. 4, the tapering surface 371 extends obliquely upwardly from an upper end $\underline{a}$ of an outer circumferential surface D spaced apart a predetermined distance (dimension W of the rotary drum) from a head supporting surface C of the rotary drum 3, and an angle formed by a line $\ell_{371}$ extending along the tapering surface 371 on the outer peripheral portion 37 of the rotary drum 3 and a line $\ell_3$ extending along the top surface of the rotary drum 3 is equal to or substantially equal to the inclination angle $\theta$ of the head drum described hereinabove. Here the dimension W is set at a minimum necessary value which may vary depending on the width of the tape T and its magnetic pattern, and a dimension E is set at a minimum necessary value for attaching the drum 3 to a chuck of the lathe for machining the rotary drum 3. The rotary drum 3 has its inner circumferential surface A, bottom surfaces B and C and outer circumferential surface D machined in a finishing step. The above described construction allows the vertical dimension of the outer circumpherantial surface D of the rotary drum 3 to be reduced in thickness by $\ell$

(2.5 m).  If the head drum device comprising the rotary drum 3 of the aforesaid construction is arranged in a tilting position as shown in Fig. 2, the head drum device has its vertical dimension reduced by $\ell'$ (= $\ell \cos \theta$) because the end portion of the top surface of the rotary drum 3 has its material removed by $\ell$, with the result that it is possible to obtain a reduction in an overall vertical dimension L of the head drum device (For example, it is possible to reduce the dimension L to about 68 mm.).

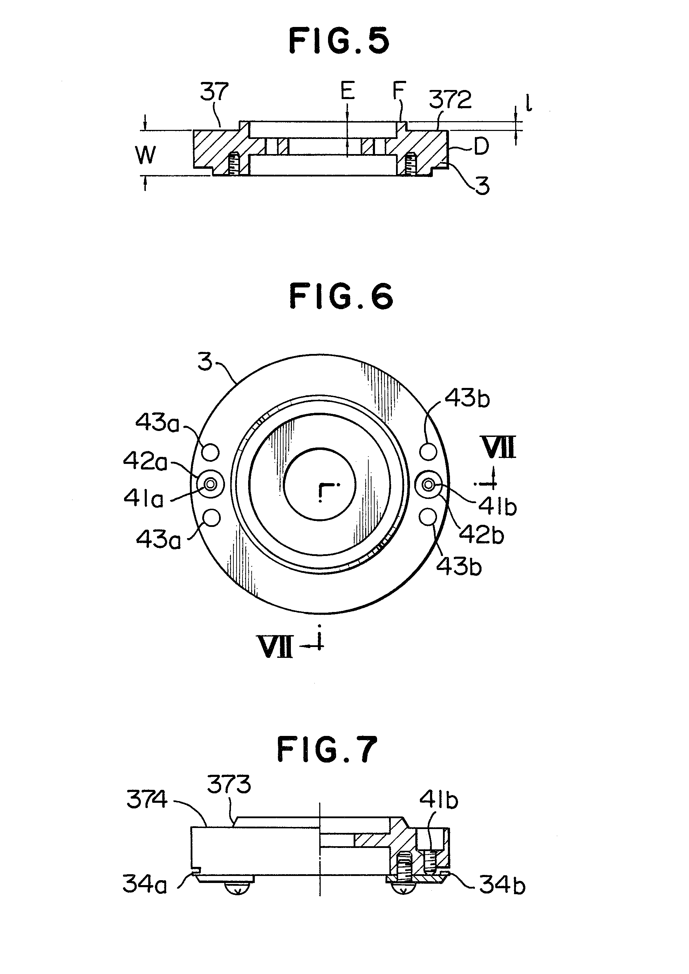

Fig. 5 shows another form of rotary drum according to the invention in a section view.  As shown, the rotary drum 3 is formed with a stepped surface 372 at the outer peripheral portion 37 of its top surface which extend from the top surface to the outer circumferential surface D thereof.  The rotary drum 3 shown in Fig. 5 is capable of achieving similar effect to the rotary drum 3 shown in Fig. 4.

The tapering surface 371 of the rotary drum 3 shown in Fig. 4 and the stepped surface 372 thereof shown in Fig. 5 have been described as being formed by machining.  However, the tapering surface 371 and stepped surface 372 may be formed integrally with the rotary drum 3 when the latter is cast in a mold, for example. What is important is not the manner in which the tapering surface 371 and stepped surface 372 are formed but that the final shape of the rotary drum 3 is as illustrated in the figures and described herein.

Fig. 6 is a plan view of still another form of rotary drum according to the invention, and Fig. 7 is a fragmentary sectional view of the rotary drum taken along the line VII-VII in Fig. 6. As shown, the rotary drum 3 is formed at its outer peripheral portion 37 of its top surface with a stepped surface including a slope 373 and a planar portion 374 extending from the top surface to the outer circumferential surface D. The planar portion 374 has formed therein with threaded openings 42a and 42b for threadably receiving therein stop screws 41a and 41b for adjusting the height of the magnetic heads 34a and 34b, respectively, which are secured to the bottom surface of the rotary drum 3. The numerals 43a and 43b designate openings for adjusting the positions of the magnetic heads 34a and 34b. These openings are formed by machining performed from the top surface side of the rotary drum 3. Thus the construction in which the planar portion 374 is included in the outer peripheral portion 37 of the top surface of the rotary drum 3 is advantageous for forming the openings 42a, 42b, 43a and 43b. It is required that the rotary drum 3 be embossed with its manufacturing number. This can be readily accomplished on the planar portion 374.

The preferred embodiment of the invention has been described hereinabove by referring to a video tape recorder of the VHS system which is one type of rotary magnetic head drum device having the magnetic heads 34a and 34b attached to the rotary drum 3 and interposed between the rotary drum 3 and the stationary drum 2.

- 11 -

0090375

It will be apparent that the invention can also have application in a video tape recorder of a beta system which is the type of rotary magnetic head drum device that includes a magnetic head rotating member interposed between two drums or upper and lower stationary drums independently thereof and driven by an output shaft of a motor. In this case, the aforesaid tapering or stepped surface would be formed at an outer peripheral portion of a top surface of the upper stationary drum located above the lower stationary drum. In this type of head drum device, the angle of inclination of the head drum device is substantially equal to the lead angle $\theta'$ of the tape edge guide portion. Thus the tapering would have to be commensurate with this angle of inclination of the head drum device.

C L A I M S

1.      A rotary magnetic head drum device comprising:

a first drum and a second drum located in juxtaposed relation one above the other; and

a head rotating member interposed between the first drum and the second drum and driven by an output shaft of a motor to rotate;

said head drum device being located at a predetermined angle of inclination;

wherein the improvement comprises:

a reduced thickness portion formed at a top surface of the first drum located over the head rotating member to extend from an end of the top surface to an upper end of an outer circumferential surface of said first drum, said reduced thickness portion being provided to reduce the thickness of an outer peripheral portion of the first drum in a value commensurate with the angle of inclination of the head drum device, whereby the head drum device has its vertical dimension reduced when the head drum device is located in an inclined position.

2.      A rotary magnetic head drum device as claimed in claim 1, wherein said reduced thickness portion comprises a tapering surface of an angle substantially equal to the angle of inclination of the head drum device.

3.      A rotary magnetic head drum device as claimed in claim 1, wherein said reduced thickness portion comprises a stepped surface extending from the end of the top surface to the upper end of the outer circumferential surface of the first drum.

4.      A rotary magnetic head drum device as claimed in claim 1, wherein said reduced thickness portion comprises a slope and a planar portion in combination extending from the end of the top surface to the upper end of the outer circumferential surface of the frist drum.

5.      A rotary magnetic head drum device as claimed in claim 1, wherein said first drum comprises a rotary drum secured to the output shaft of the motor and having the head rotating member attached thereto to act as a unit therewith; said second drum comprises a stationary drum located in juxtaposed relation to a head supporting surface of said first drum; and said reduced thickness portion is formed at said rotary drum in a manner to extend from the end of the top surface to the upper end of the outer circumferential surface of the rotary drum.

6.      A rotary magnetic head drum device as claimed in claim 1, wherein said first drum and said second drum are both stationary drums and said head rotating member is interposed between the two stationary drums and connected to the output shaft of the motor, and said reduced thickness portion is formed at one stationary drum located above the other stationary drum and extends from the end of the top surface to the upper end of the outer circumferential surface of the one stationary drum located above the other stationary drum.

7.      A rotary magnetic head drum device comprising:

- 3 -            0090375

a rotary drum secured to an output shaft of a motor and having a rotary magnetic head attached thereto; and

a stationary drum located in juxtaposed relation to said rotary drum to constitute a head drum in association with said rotary drum;

said head drum being located at a predetermined angle of inclination;

wherein the improvement comprises:

a reduced thickness portion formed at a top surface of one of the rotary drum and the stationary drum that is located above the other drum to extend from an end of the top surface to an upper end of an outer circumferential surface of the one drum located above the other drum, said reduced thickness portion being provided to reduce the thickness of an outer peripheral portion of the said one drum in a value commensurate with the angle of inclination of the head drum, whereby the overall height of the head drum is reduced when the head drum is located in an inclined position.

8.      A rotary magnetic head drum device as claimed in claim 7, wherein said reduced thickness portion comprises a tapering surface of an angle substantially equal to the angle of inclination of the head drum.

9.      A rotary magnetic head drum device as claimed in claim 7, wherein said reduced thickness portion comprises a stepped surface extending from the end of the top surface to the upper end of the outer

0090375

circumferential surface of the rotary drum located above
the stationary drum.

10.       A rotary magnetic head drum device comprising:

          a rotary drum secured to an output shaft of a
motor and having a rotary magnetic head attached to its
bottom surface; and

          a stationary drum located below the rotary
drum in juxtaposed relation to constitute a head drum in
association with said rotary drum;

          said head drum being located at an angle of
inclination which is in the range between an angle
substnantially equal to a lead angle of a tape edge guide
portion formed on the stationary drum and an angle
substantially twice the lead angle; and

          a reduced thickness portion formed at an outer
peripheral portion of a top surface of the rotary drum
opposite the bottom surface supporting the rotary magnetic
head and extendig from an end of the top surface to an
upper end of an outer circumferential surface of the
rotary drum, whereby the overall height of the head drum
is reduced and the axial dimension of the outer circumferential surface of the rotary drum is set at a minimum
value which may vary depending on the width of a tape
brought into contact with the rotary drum and a magnetic
recoding pattern thereof when the head drum is located
in an inclined position.

11.       A rotary magnetic head drum device as claimed
in claim 10, wherein said reduced thickness portion comprises a tapering surface extending from the end of the top surface of the rotary drum to the upper end of the outer circumferential surface thereof and having substantially the same angle as the angle of inclination of the head drum.

12.    A rotary magnetic head drum device as claimed in claim 10, wherein said reduced thickness portion comprises a stepped surface extending from the end of the top surface of the rotary drum to the upper end of the outer circumferential surface thereof.

13.    A rotary magnetic head drum device of a helical scan type comprising:

a rotary magnetic head; and

an upper and a lower drums located above and below said magnetic head respectively in juxtaposed relation to constitute a head drum, said upper and lower drums being located together with the magnetic head in a position inclined a predetermined angle of inclination;

wherein the improvement comprises:

a reduced thickness portion formed at the upper drum located over the rotary magnetic head and extending from an end of a top surface to an upper end of an outer circumferential surface of the upper drum to reduced the thickness of an outer peripheral portion of the upper drum, whereby the vertical dimension of the head drum is reduced when the head drum is located in an inclined position.

14.    A rotary magnetic head drum device as claimed in claim 13, wherein said reduced thickness portion comprises a tapering surface extending from the end of the top surface to the upper end of the outer circumferential surface of the upper drum and having substantially the same angle as the angle of inclination of the head drum.

15.     A rotary magnetic head drum device as claimed in claim 13, wherein said reduced thickness portion comprises a stepped surface extending from the end of the top surface to the upper end of the outer circumferential surface of the upper drum.

# FIG. 1

## PRIOR ART

**FIG.2**

**FIG.3**

**FIG.4**

# FIG.5

37    E   F    372    l

W      D

3

# FIG.6

3

43a

42a

41a

43a

43b

VII

41b

42b

43b

VII

# FIG.7

374   373     41b

34a          34b